# FASCICULE DE BREVET EUROPEEN

(11) **EP 1 345 672 B1**
(45) Date de publication et mention de la délivrance du brevet: **22.03.2006**
(21) Numéro de dépôt: 01995787.7
(22) Date de dépôt: 24.12.2001
(51) Int. Cl.: B01D 63/06, F16L 41/00

(54) **JOINT D'ETANCHEITE POUR ELEMENT DE FILTRATION ET MODULE INTEGRANT UN ELEMENT DE FILTRATION EQUIPE D'UN TEL JOINT D'ETANCHEITE**
DICHTUNG FÜR EIN FILTERELEMENT UND MODUL WELCHER EIN MIT EINER DERARTIGEN DICHTUNG AUSGERÜSTETES FILTERELEMENT AUFWEIST
GASKET FOR A FILTRATION ELEMENT AND MODULE INTEGRATING A FILTRATION ELEMENT FITTED WITH SUCH A GASKET

(30) Priorité: 29.12.2000 FR 0017329
(43) Date de publication de la demande: 24.09.2003
(73) Titulaire: Technologies Avancees & Membranes Industrielles S.A., 26110 Nyons (FR)
(72) Inventeur: GRANGEON, André, F-84600 Valreas (FR); LESCOCHE, Philippe, F-84340 Faucon (FR); MILLARES, Michel, F.26110 Nyons (FR)
(74) Mandataire: Thibault, Jean-Marc
(86) Numéro de dépôt international: PCT/FR2001/004189
(87) Numéro de publication internationale: WO 2002/053270

(56) Documents cités:
- EP-A- 0 821 996
- FR-A- 2 786 109
- US-A- 4 849 104
- PATENT ABSTRACTS OF JAPAN vol. 013, no. 241 (C-604), 6 juin 1989 (1989-06-06) -& JP 01 051108 A (NGK INSULATORS LTD), 27 février 1989 (1989-02-27) -& DATABASE WPI Derwent Publications Ltd., London, GB; AN 1989-104012 XP002180336 & JP 01 051108 A

## Description

La présente invention concerne le domaine technique de la séparation moléculaire ou particulaire mettant en oeuvre des éléments de filtration ou de séparation appelés généralement membranes, adaptés pour assurer la séparation des molécules ou des particules contenues dans un milieu fluide à traiter.

La présente invention concerne plus précisément les moyens techniques adaptés pour assurer l'étanchéité de ces éléments de séparation ou de filtration.

L'objet de l'invention trouve une application particulièrement avantageuse dans le domaine de la filtration, au sens général, d'un milieu fluide à traiter et en particulier de la nanofiltration, de l'ultrafiltration, de la microfiltration, etc.

Dans l'état de la technique, il est connu de mettre en oeuvre un module de filtration constitué d'une enveloppe métallique et équipé à chaque extrémité, d'une plaque support aménagée pour présenter un ou plusieurs passages destinés à permettre le positionnement, les uns par rapport aux autres, des éléments de filtration présentant chacun une forme tubulaire. Les éléments de filtration s'étendent ainsi à l'intérieur de l'enveloppe, parallèlement les uns aux autres et sont montés de manière étanche à chacune de leur extrémité sur la plaque support.

Chaque élément de filtration comporte au moins un canal de circulation pour le fluide à traiter, s'étendant d'une partie terminale à l'autre de l'élément. Les éléments de filtration assurent la filtration tangentielle du fluide en vue d'obtenir, à la surface périphérique des éléments de filtration, la sortie du filtrat destiné à être récupéré dans un volume de collecte situé entre les plaques support et l'enveloppe.

Afin d'assurer l'étanchéité entre les parties terminales des éléments de filtration et les plaques support, des joints d'étanchéité sont positionnés et serrés par l'intermédiaire d'une contre-plaque métallique fixée sur chaque plaque support. Ces joints d'étanchéité qui sont réalisés en une matière déformable, telle qu'un élastomère ou un caoutchouc, permettent d'obtenir par serrage, une étanchéité entre les plaques support et les éléments de filtration.

Le document US 4 849 104 A décrit un joint d'étanchéité destiné à être monté dans un passage d'une plaque-support pour entourer l'extrémité d'un élément de filtration de forme tubulaire muni d'au moins un canal de circulation pour un fluide, et qui est constitué sous la forme d'un manchon possédant une hauteur supérieure à la hauteur du passage de la plaque-support, et présentant un alésage de recouvrement pour l'élément de filtration délimité entre une extrémité du manchon et un épaulement qui délimite avec l'autre extrémité du manchon, un alésage de canalisation pour le fluide, l'épaulement possédant une surface destinée à servir de butée pour la partie terminale de l'élément de filtration.

Le document FR 2 786 109 A décrit un multi-joint d'étanchéité comportant une série de joints d'étanchéité reliés entre-eux par des zones de liaison.

Or, il apparaît parfois que des éléments de filtration se trouvent cassés au niveau de leurs parties terminales positionnées dans les plaques support. La déposante a mis en évidence que la principale cause de rupture des éléments de filtration au niveau des plaques support provient du frottement de l'élément de filtration sur la plaque support et/ou sur la contre-plaque de serrage.

A partir de cette constatation la déposante a mis au point un nouveau joint d'étanchéité pour élément de filtration, conçu pour éviter que ce dernier se trouve érodé par le contact avec les plaques support et/ou les contre-plaques de serrage, sans entraver la circulation du fluide.

L'objet de l'invention vise donc à proposer un joint d'étanchéité destiné à être monté dans un passage d'une plaque support pour entourer l'extrémité d'un élément de filtration de forme tubulaire muni d'au moins un canal de circulation pour un fluide, s'inscrivant dans une section de circulation.

Selon l'invention, le joint d'étanchéité est constitué sous la forme d'un manchon :
- possédant une hauteur au moins supérieure à la hauteur du passage de la plaque support,
- et présentant un alésage de recouvrement pour l'élément de filtration délimité entre une extrémité du manchon et un épaulement qui délimite avec l'autre extrémité du manchon un alésage de canalisation pour le fluide, l'épaulement possédant une surface destinée à servir de butée pour la partie terminale de l'élément de filtration et présentant des dimensions adaptées pour s'étendre en dehors de la section de circulation pour ne pas entraver la circulation du fluide, l'alésage de recouvrement étant muni d'une gorge bordant l'épaulement pour autoriser le fluage du joint.

Le joint d'étanchéité selon l'invention permet d'éviter tout contact entre les éléments de filtration et les parties métalliques constituées par les contre-plaques de serrage et les plaques support. Grâce à la mise en oeuvre d'une butée pour les éléments de filtration, ces derniers ne peuvent se déplacer sous l'effet de la différence de pression apparaissant entre leurs parties terminales amont et aval, de sorte que l'élément de filtration ne peut plus se déplacer et, par conséquent, entrer en contact avec la contre plaque métallique.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une vue en coupe élévation d'un exemple de réalisation d'un module de filtration mettant en oeuvre le joint d'étanchéité conforme à l'invention.
La **fig. 2** est une vue transversale prise sensiblement selon les lignes II-II de la **fig. 1.**
La **fig. 3** illustre un élément de filtration équipé à chacune de ses parties terminales d'un joint d'étanchéité conforme à l'invention.
La **fig. 4** est une vue transversale à plus grande échelle prise sensiblement selon les lignes **IV-IV** de la **fig. 3** et montrant un détail caractéristique de l'objet de l'invention.
La **fig. 5** est une vue à plus grande échelle montrant différentes caractéristiques d'un exemple de réalisation d'un joint d'étanchéité selon l'invention.
La **fig. 6** illustre un multi-joint d'étanchéité conforme à l'invention.

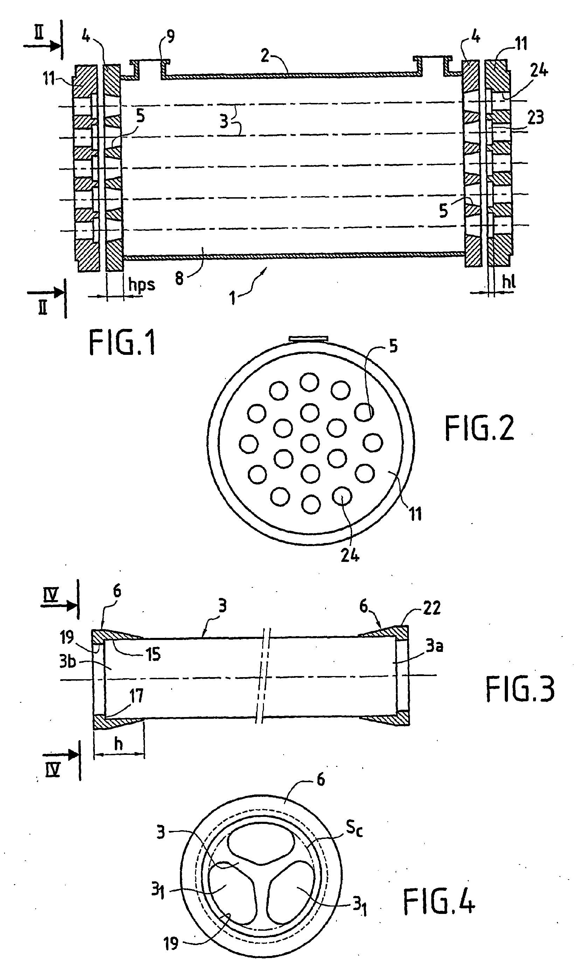

Tel que cela ressort plus précisément des **fig. 1** et **2,** l'objet de l'invention est mis en oeuvre pour un dispositif ou module **1** assurant la filtration tangentielle pour un fluide à traiter pouvant être de toute nature. Le module **1** comporte, dans une enveloppe ou virole **2,** au moins un et d'une manière générale, une série d'éléments de filtration **3,** de forme tubulaire, s'étendant parallèlement les uns aux autres et représentés à la **fig. 1** uniquement par leur axe. Tel que cela ressort plus précisément des **fig. 3** et **4,** chaque élément de filtration **3** possède une forme extérieure de section droite transversale, par exemple hexagonale ou circulaire dans l'exemple illustré. Chaque élément de filtration **3** comporte au moins un, et dans l'exemple, trois canaux **3**_{**1**} réalisés parallèlement à l'axe longitudinal de l'élément de filtration **3** pour déboucher à chacune de ses parties terminales **3a, 3b.** La surface de chaque canal **3**_{**1**} est recouverte par au moins une couche séparatrice, non représentée, destinée à être en contact avec le milieu fluide à traiter circulant à l'intérieur du canal. La nature de la ou des couches séparatrices est choisie en fonction du pouvoir de séparation ou de filtration à obtenir.

Les éléments de filtration **3** sont montés, à chacune de leurs parties terminales **3a, 3b,** sur une plaque de support **4** fixée de manière étanche, à chaque extrémité de l'enveloppe **2.** De manière classique, chaque plaque support **4** comporte un nombre de passages **5** égal au nombre d'éléments de filtration **3** montés à l'intérieur de l'enveloppe **2.** De préférence, chaque passage **5** présente une forme tronconique avec la petite base s'ouvrant à l'intérieur de l'enceinte délimitée par l'enveloppe **2.** Chaque passage **5** permet le positionnement d'une partie terminale d'un élément de filtration tubulaire **3.** Chaque passage **5** est destiné à être équipé d'un joint d'étanchéité **6** conforme à l'invention permettant d'assurer un montage étanche des éléments de filtration **3** sur les plaques support **4.** Les plaques support **4** définissent entre elles et avec l'enveloppe **2,** une enceinte **8** de collecte communiquant par au moins une sortie **9** d'évacuation pour le filtrat, c'est-à-dire du milieu fluide ayant traversé les éléments de filtration **3.** De manière classique, sur chaque plaque support **4** est destinée à être montée, par tous moyens appropriés, une contre-plaque de serrage **11** permettant d'assurer la déformation des joints d'étanchéité **6** afin d'obtenir une bonne étanchéité.

Tel que cela ressort plus précisément des **fig. 3** à **5,** chaque joint d'étanchéité **6** est constitué sous la forme d'un manchon possédant une hauteur **h** au moins supérieure à la hauteur **hps** de la plaque support **4.** Ainsi, le joint d'étanchéité **6** est à même de recouvrir l'élément de filtration **3** sur une longueur au moins égale à la hauteur **hps** de la plaque support **4.** Dans ces conditions, l'élément de filtration **3** ne peut pas venir en contact avec la plaque support **4** de sorte que l'élément de filtration **3** ne subit pas de frottement ni d'érosion susceptible d'entraîner sa cassure.

Selon une autre caractéristique de l'invention, le joint d'étanchéité **6** présente un alésage de recouvrement **15** pour l'élément de filtration **3,** délimité entre une extrémité **16** du manchon et un épaulement **17** qui délimite, avec l'autre extrémité **18** du manchon, un alésage **19** de canalisation pour le fluide. Comme cela apparaît plus précisément à la **fig. 3,** l'épaulement **17** sert de butée pour une partie terminale de l'élément de filtration **3.** Cet épaulement **17** présente une surface présentant des dimensions adaptées pour s'étendre en dehors de la section **Sc** de libre circulation pour le fluide. Tel que cela ressort plus précisément de la **fig. 4,** chaque élément de filtration **3** comporte au moins un, et dans l'exemple illustré, trois canaux de circulation **3**_{**1**} s'inscrivant dans la section de libre circulation **Sc**. En d'autres termes, cette section de circulation **Sc** correspond à l'enveloppe englobant l'ensemble des canaux de circulation **3**_{**1**}**,** de sorte que subsiste autour de cette section, une surface périmétrique s'étendant jusqu'à la périphérie de l'élément de filtration. Ainsi, l'épaulement **17** présente des dimensions adaptées pour s'étendre en dehors de la section de circulation **Sc** de l'élément de filtration, de manière à ne pas entraver la circulation du fluide débouchant par les canaux **3**_{**1**}**.**

Selon une caractéristique de l'invention, l'alésage de recouvrement **15** possède une hauteur déterminée **hp** ainsi qu'un diamètre déterminé **dp.** En considérant que le diamètre de l'élément de filtration **3** est égal à **dm,** le rapport du diamètre **dp** de l'alésage de recouvrement sur le diamètre **dm** de l'élément de filtration est compris entre 0,6 et 1 et le rapport entre la hauteur **hp** de l'alésage de recouvrement **15** et le diamètre **dm** de l'élément de filtration **3** est compris entre 0,2 et 1,5.

Selon une autre caractéristique de l'invention, l'alésage de canalisation **19** possède un diamètre intérieur **dci** déterminé et une hauteur intérieure **hci** déterminée. La hauteur intérieur **hci** de l'alésage de canalisation **19** est comprise entre le diamètre intérieur **dci** de l'alésage de canalisation divisé par 2 et le diamètre intérieur **dci** de l'alésage de canalisation divisé par 24. Par ailleurs, le rapport du diamètre intérieur **dci** de l'alésage de canalisation **19** divisé par le diamètre **dm** de l'élément de filtration **3** est compris entre 0,77 et 0,9.

Selon une caractéristique préférée de réalisation, chaque joint d'étanchéité **6** possède extérieurement à partir de l'extrémité **18** dans laquelle débouche l'alésage de canalisation **19,** un diamètre déterminé **dce** sur une hauteur déterminée **hce** de manière à former une collerette externe **21.** Cette collerette **21** présente ainsi sur toute sa hauteur un diamètre constant. Le rapport du diamètre **dce** de la collerette **21** sur le diamètre **dm** de l'élément de filtration est compris entre 1,1 et 2.

Selon une caractéristique préférée de réalisation, chaque contre-plaque **11** comporte, en vis-à-vis de chaque passage **5,** un lamage **23** aménagé à partir de l'une des faces principales de la contre-plaque **11** située en vis-à-vis de la plaque support **4** voisine. Chaque lamage **23** qui communique avec un trou débouchant **24** aménagé dans la contre-plaque **11,** est adapté pour recevoir un joint d'étanchéité **6.** Plus précisément, chaque lamage **23** est destiné à recevoir le joint **6** à partir de son extrémité **18,** de manière à recevoir, au moins en partie, la collerette **21** du manchon. Selon une caractéristique de réalisation, la hauteur **hce** de la collerette externe **21** est telle que le rapport de cette hauteur **hce** sur la hauteur **hl** du lamage **23** est compris entre 1,5 et 10.

Selon une autre caractéristique de l'invention, chaque joint d'étanchéité **6** possède extérieurement, à partir de la collerette **21,** une première partie **25** de forme tronconique et une deuxième partie **26** de forme tronconique s'étendant jusqu'à l'extrémité **16** dans laquelle débouche l'alésage de recouvrement **15.**

Selon une caractéristique de réalisation, la première partie conique **25** possède un diamètre externe maximum **dpc1ma**, un diamètre externe minimum **dpc1mi** et une hauteur externe **hpc1**. La hauteur externe **hpc1** de la première partie conique **25** est comprise entre le diamètre **dm** de l'élément de filtration divisé par 5 et le diamètre **dm** de l'élément de filtration divisé par 20.

Selon une autre caractéristique préférée de réalisation, le rapport entre le diamètre externe maximum **dpc1ma** de la première partie conique **25** sur le diamètre **dce** de la collerette est compris entre 0,77 et 1, tandis que le rapport du diamètre externe minimum **dpc1mi** de la première partie conique **25** sur le diamètre externe maximum **dpc1ma** de la première partie conique, est compris entre 0,83 et 1.

Selon une autre caractéristique préférée de réalisation, la deuxième partie conique **26** possède un diamètre externe maximum **dpc2ma** égal au diamètre externe minimum **dpc1mi** de la première partie conique **25.** Cette deuxième partie conique **26** possède également un diamètre externe minimum **dpc2mi** déterminé et une hauteur externe **hpc2** déterminée. Le rapport entre le diamètre **dp** de l'alésage de recouvrement **15** sur le diamètre externe minimum **dpc2mi** de la deuxième partie conique **26** est compris entre 0,8 et 1, tandis que le rapport entre la hauteur externe **hpc2** de la deuxième partie conique **26** sur le diamètre **dm** de l'élément de filtration **3** est compris entre 0,2 et 1,5.

Selon une autre caractéristique de l'invention, l'alésage de recouvrement **15** est muni d'une gorge **28** bordant l'épaulement **17** pour autoriser le fluage de la matière constitutive du joint d'étanchéité **6.** Ainsi, lors du serrage de la contre-plaque **11** sur la plaque support **4,** une partie de la matière du joint peut fluer à l'intérieur de cette gorge **28** tout en ne venant pas obstruer la section de circulation **Sc** de l'élément de filtration.

Selon une caractéristique préférée de réalisation, la gorge **28** présente un diamètre déterminé **dg** et une hauteur déterminée **hg** tels que le rapport du diamètre **dg** de la gorge sur le diamètre **dm** de l'élément de filtration est compris entre 1 et 1,5 tandis que le rapport entre la hauteur **hg** de la gorge **28** sur la hauteur intérieure **hci** de l'alésage de canalisation **19** est compris entre 0,2 et 1.

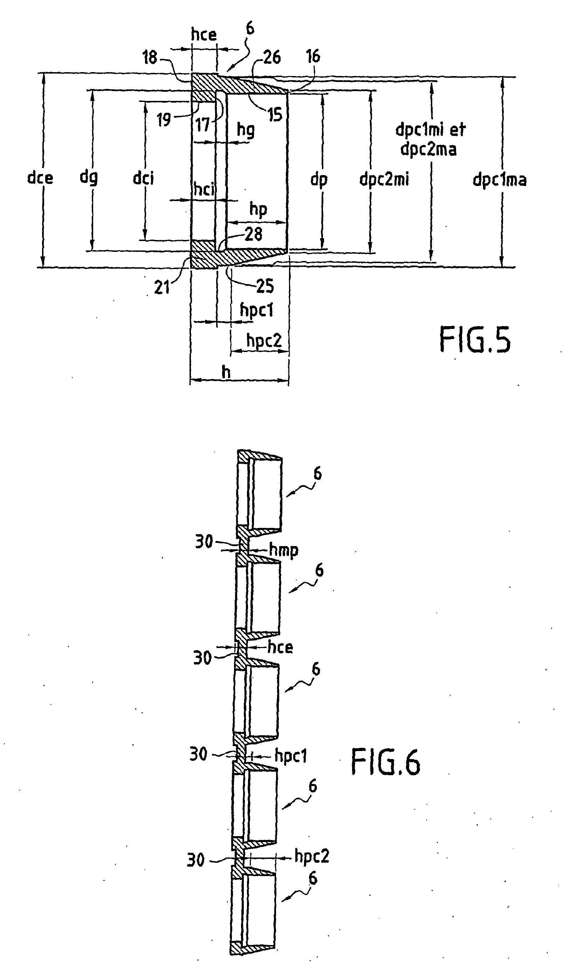

Dans l'exemple qui précède, chaque plaque de support **4** est équipée d'une série de joints individuels **6** distincts, montés chacun à l'intérieur d'un passage **5.** Selon une autre caractéristique de réalisation illustrée plus particulièrement à la **fig. 6,** une série de joints d'étanchéité **6** destinés à être montés sur une plaque support **4** peuvent être reliés entre eux par l'intermédiaire de zones de liaison **30,** de manière à constituer une pièce unique. Chaque zone de liaison **30** possède une hauteur déterminée **hmp** telle que le rapport **hmp** sur la hauteur **hce** de la collerette **21** est compris entre 1 et 0,2.

## Revendications

1. Joint d'étanchéité destiné à être monté dans un passage (**5**) d'une plaque-support (**4**) pour entourer l'extrémité d'un élément de filtration (**3**) de forme tubulaire muni d'au moins un canal (**3**_{**1**}) de circulation pour un fluide, s'inscrivant dans une section de circulation (**Sc**), constitué sous la forme d'un manchon :
• possédant une hauteur (**h**) au moins supérieure à la hauteur (**hps**) du passage (**5**) de la plaque-support (**4**),
• et présentant un alésage de recouvrement (**15**) pour l'élément de filtration (**3**) délimité entre une extrémité (**16**) du manchon et un épaulement (**17**) qui délimite avec l'autre extrémité du manchon, un alésage de canalisation (**19**) pour le fluide, l'épaulement (**17**) possédant une surface destinée à servir de butée pour la partie terminale de l'élément de filtration et présentant des dimensions adaptées pour s'étendre en dehors de la section de circulation (**Sc**) pour ne pas entraver la circulation du fluide, l'alésage de recouvrement (**15**) étant muni d'une gorge (**28**) bordant l'épaulement (**17**) pour autoriser le fluage du joint.

2. Joint d'étanchéité selon la revendication 1, **caractérisé en ce que** la gorge (**28**) présente un diamètre (**dg**) et une hauteur (**hg**) tels que le rapport (**dg/dm**) est compris entre 1 et 1,5 et le rapport (**hg/hci**) est compris entre 0,2 et 1, avec (**dm**), le diamètre de l'élément de filtration (**3**) et (**hci**) la hauteur de l'alésage de canalisation (**19**).

3. Joint d'étanchéité selon la revendication 1, **caractérisé en ce que** l'alésage de recouvrement (**15**) possède une hauteur (**hp**) et un diamètre (**dp**), tels que le rapport (**dp/dm**) est compris entre 0,6 et 1 et le rapport (**hp/dm**) est compris entre 0,2 et 1,5, avec (**dm**), le diamètre de l'élément de filtration (3).

4. Joint d'étanchéité selon la revendication 1, **caractérisé en ce que** l'alésage de canalisation (**19**) possède un diamètre intérieur (**dci**) et une hauteur intérieure (**hci**) comprise entre (**dci/2**) et (**dci/24**) et tels que le rapport (**dci/dm**) est compris entre 0,77 et 0,9.

5. Joint d'étanchéité selon l'une des revendications 1 à 4, **caractérisé en ce que** le manchon possède extérieurement, à partir de l'extrémité (**18**) dans laquelle débouche l'alésage de canalisation (**19**), un diamètre (**dce**) sur une hauteur (**hce**), de manière à former une collerette externe (**21**), le rapport (**dce/dm**) étant compris entre 1,1 et 2 et le rapport (**hce/hl**) étant compris entre 1,5 et 10, avec (**hl**), hauteur d'un lamage (**23**) de réception du joint, aménagé sur une contre-plaque (**11**) destinée à être fixée sur la plaque-support (**4**)**.**

6. Joint d'étanchéité selon la revendication 5, **caractérisé en ce que** le manchon possède extérieurement, à partir de la collerette (**21**), une première partie de forme tronconique (25) et une deuxième partie de forme tronconique (**26**) s'étendant jusqu'à l'extrémité (**16**) dans laquelle débouche l'alésage de recouvrement (**15**).

7. Joint d'étanchéité selon la revendication 6, **caractérisé en ce que**
• la première partie conique (**25**) possède un diamètre externe maximum (**dpc1ma**), un diamètre externe minimum (**dpc1mi**) et une hauteur externe (**hpc1**) comprise entre (**dm/5**) et (**dm/20**), et tels que le rapport (**dpc1ma/dce**) est compris entre 0,77 et 1, le rapport (**dpc1mi/dpc1ma**) est compris entre 0,83 et 1,
• la deuxième partie conique (**26**) possède un diamètre externe maximum (**dpc2ma**) égal au diamètre externe minimum (**dpc1mi**) de la première partie conique (**25**) et un diamètre externe minimum (**dpc2mi**) et une hauteur externe (**hpc2**), tels que le rapport (**dp/dpc2mi**) est compris entre 0,8 et 1 et le rapport (**hpc2/dm**) est compris entre 0,2 et 1,5.

8. Multi-joint d'étanchéité **caractérisé en ce qu'**il comporte une série de joints d'étanchéité (**6**) conformes à la revendication 1, reliés entre-eux par des zones de liaison (**30**).

9. Multi-joint d'étanchéité selon la revendication 8, **caractérisé en ce que** les zones de liaison (**30**) possèdent chacune une hauteur (**hmp**), telle que le rapport (**hmp/hce**) est compris entre 1 et 0,2.

10. Module de filtration du type comportant au moins un élément de filtration (**3**) de forme tubulaire, supporté à chacune de ses parties terminales, par une plaque-support (**4**) munie d'un passage (**5**) et sur laquelle est fixée une contre-plaque (**11**) munie d'un lamage (**23**) pour chaque élément de filtration (**3**),
**caractérisé en ce qu'**il comporte pour chaque passage (**5**) des plaques-supports (**4**) un joint d'étanchéité (**6**) conforme à l'une des revendications 1 à 7.

11. Module de filtration du type comportant au moins deux éléments de filtration (**3**) de forme tubulaire, supportés à chacune de leurs parties terminales, par une plaque-support (**4**) munie d'un passage (**5**) et sur laquelle est fixée une contre-plaque (**11**) munie d'un lamage (**23**) pour chaque élément de filtration,
**caractérisé en ce qu'**il comporte un joint d'étanchéité (**6**) conforme à l'une des revendications 1 à 7 pour chaque passage (**5**) des plaques-supports (**4**), ou un multi-joint d'étanchéité conforme à la revendication 8, équipant chaque plaque-support (**4**).

## Claims

1. A sealing gasket for mounting in a passage (5) of a support plate (4) in order to surround the end of a filtration element (3) with a tubular shape provided with at least one fluid flow channel (3₁), lying within a flow section (Sc), made in the form of a sleeve:
• possessing a height (h) at least larger than the height (hps) of the passage (5) of the support plate (4),
• and having a overlap bore (15) for the filtration element (3) delimited between one end (16) of the sleeve and a shoulder (17) which delimits with the other end of the sleeve, a conduit bore (19) for the fluid, the shoulder (17) possessing a surface intended to be used as an abutment for the terminal portion of the filtration element and having dimensions adapted to extend outside the flow section (Sc) so as not to impede fluid circulation, the overlap bore (15) being provided with a groove (28) edging the shoulder (17) to allow the gasket to creep.

2. The sealing gasket according to claim 1, **characterized in that** the groove (28) has a diameter (dg) and a height (hg) such that the ratio (dg/dm) lies between 1 and 1.5 and the ratio (hg/hci) lies between 0.2 and 1, with (dm) being the diameter of the filtration element (3) and (hci) the height of the conduit bore (19).

3. The sealing gasket according to claim 1, **characterized in that** the overlap bore (15) has a height (hp) and a diameter (dp) such that the ratio (dp/dm) lies between 0.6 and 1 and the ratio (hp/dm) lies between 0.2 and 1.5, with (dm) being the diameter of the filtration element (3).

4. The sealing gasket according to claim 1, **characterized in that** the conduit bore (19) has an inside diameter (dci) and an inside height (hci) between (dci/2) and (dci/24) such that the ratio (dci/dm) lies between 0.77 and 0.9.

5. The sealing gasket according to any of claims 1 to 4, **characterized in that** the sleeve possesses on the outside, starting from the end (18) into which the conduit bore (19) opens out, a diameter (dce) extending over a height (hce) so as to form an outside collar (21), the ratio (dce/dm) lying between 1.1 and 2 and the ratio (hce/hl) lying between 1.5 and 10, with (h1) being the height of a gasket-receiving countersink (23), formed on a backplate (11) for fixing onto the support plate (4).

6. The sealing gasket according to claim 5, **characterized in that** the sleeve has on the outside, from the flange (21), a first portion (25) with a frustro-conical shape and a second portion (26) with a frustro-conical shape extending up to the end (16) into which the overlap bore (15) opens out.

7. The sealing gasket according to claim 6, **characterized in that**
• the first conical portion (25) has a maximum outside diameter (dpc1ma), a minimum outside diameter (dpc1mi) and an outside height (hpc1) between (dm/5) and (dm/20), and such that the ratio (dpc1ma/dce) lies between 0.77 and 1, and the ratio (dpc1mi/dpc1ma) lies between 0.83 and 1,
• the second conical portion (26) has a maximum outside diameter (dpc2ma) equal to the minimum outside diameter (dpc1mi) of the first conical portion (25) and a minimum outside diameter (dpc2mi) and an outside height (hpc2), such that the ratio (dp/dpc2mi) is between 0.8 and 1 and the ratio (hpc2/dm) is between 0.2 and 1.5.

8. A multiple sealing gasket **characterized in that** it includes a series of sealing gaskets (6) in accordance with claim 1, interconnected by connection zones (30).

9. A multiple sealing gasket according to claim 8, **characterized in that** the connection zones (30) each possess a height (hmp), such that the ratio (hmp/hce) lies between 1 and 0.2.

10. A filtration module of the type including at least one filtration element (3) with a tubular shape, supported at each of its terminal portions, by a support plate (4) provided with a passage (5) and on which is attached a backplate (11) provided with a countersink (23) for each filtration element (3),
**characterized in that** for each passage (5) of the support plates (4), it includes a sealing gasket (6) according to any of claims 1 to 7.

11. A filtration module of the type including at least two filtration elements (3) with a tubular shape, supported at each of their terminal portions, by a support plate (4) provided with a passage (5) and on which is fixed a backplate (11) provided with a countersink (23) for each filtration element,
**characterized in that** for each passage (5) of the support plates (4), it includes a sealing gasket (6) according to any of claims 1 to 7, or a multiple sealing gasket according to claim 8, fitted to each support plate (4).

## Patentansprüche

1. Dichtungsverbindung, die dazu vorgesehen ist, in einem Durchgang (5) einer Trägerplatte (4) angebracht zu werden, um das Ende eines röhrenförmigen Filterelementes (3) zu umgeben, welches mit wenigstens einem Kanal (3₁) zur Zirkulation für ein Fluid ausgerüstet ist, das sich in einen kreisförmigen Querschnitt (Sc) einfügt, bestehend in einer Manschettenform:
- welche eine Höhe (h) wenigstens über der Höhe (hps) des Durchgangs (5) der Trägerplatte (4) aufweist,
- und eine Bohrung zur Überlappung (15) für das Filterelement (3) aufweist, welches begrenzt ist durch ein Ende (16) der Manschette und eine Schulter (17), die mit dem anderen Ende der Manschette eine Kanalbohrung (19) für das Fluid begrenzt, wobei die Schulter (17) eine Oberfläche hat, die dazu vorgesehen ist, als Anschlag für den Endteil des Filterelementes zu dienen und welche Dimensionen aufweißt, die dazu ausgelegt sind, sich aus dem Zirkulationsabschnitt (Sc) heraus zu erstrecken, um die Zirkulation des Fluids nicht zu behindern, wobei die Bohrung zur Überlappung (15) mit einer Auskehlung (28) versehen ist, die die Schulter (17) säumt, um das Kriechen der Verbindung zuzulassen.

2. Dichtungsverbindung nach Anspruch 1, **dadurch gekennzeichnet, daß** die Auskehlung (28) einen Durchmesser (dg) und eine Höhe (hg) derart aufweißt, daß das Verhältnis (dg/gm) zwischen 1 und 1,5 liegt und das Verhältnis (hg/hci) zwischen 0,2 und 1 liegt mit (dm) dem Durchmesser des Filterelementes (3) und (hci) der Höhe der Kanalbohrung (19).

3. Dichtungsverbindung nach Anspruch 1, **dadurch gekennzeichnet, daß** die Bohrung zur Überlappung (15) eine Höhe (hp) und einen Durchmesser (dp) derart aufweißt, daß das Verhältnis (dp/dm) zwischen 0,6 und 1 liegt und das Verhältnis (hp/dm) zwischen 0,2 und 1,5 liegt mit (dm) dem Durchmesser des Filterelementes (3).

4. Dichtungsverbindung nach Anspruch 1, **dadurch gekennzeichnet, daß** die Kanalbohrung (19) einen Innendurchmesser (dci) und eine Innenhöhe (hci) aufweißt, die zwischen (dci/2) und (dci/24) liegt und derart, daß das Verhältnis (dci/dm) zwischen 0,77 und 0,9 liegt.

5. Dichtungsverbindung nach einem der Ansprüche 1 bis 4, **dadurch gekennzeichnet**, das die Manschette außen von dem Ende (18) aus, in welches die Kanalbohrung (19) mündet, einen Durchmesser (dce) auf einer Höhe (hce) derart hat, daß ein Außenkragen (21) gebildet wird, wobei das Verhältnis (dci/dm) zwischen 1,1 und 2 ist und das Verhältnis (hce/hl) zwischen 1,5 und 10 ist mit (hl) der Höhe einer Senkung (23) zur Aufnahme der Verbindung, eingebracht auf einer Gegenplatte (11), die dazu vorgesehen ist, auf der Trägerplatte (4) befestigt zu werden.

6. Dichtungsverbindung nach Anspruch 5, **dadurch gekennzeichnet, daß** die Manschette außen ausgehend vom Kragen (21) einen ersten Teil mit Kegelstumpfform (25) und eine zweiten Teil mit Kegelstumpfform (26) aufweißt, der sich bis zum Ende (16) erstreckt, in welchen die Bohrung zur Überlappung (15) mündet.

7. Dichtungsverbindung nach Anspruch 6, **dadurch gekennzeichnet, daß**
- der erste Kegelstumpfteil (25) einen maximalen Außendurchmesser (dpc1ma), einen äußeren Minimaldurchmesser (dcp1mi) und eine Außenhöhe (hpc1) aufweißt, die zwischen (dm/5) und (dm/20) liegt und derart, daß das Verhältnis (dpc1mi/dce) zwischen 0,77 und 1 liegt, das Verhältnis (dpc1mi/dpc1ma) zwischen 0,83 und 1 liegt.
- der zweite konische Teil (26) einen maximalen Außendurchmesser (dpc2ma) gleich dem minimalen Außendurchmesser (dpc1mi) des ersten Kegelstumpfteiles und einen minimalen Außendurchmesser (dpc2mi) und eine Außenhöhe (hpc2) derart aufweißt, daß das Verhältnis (dp/dpc2mi) zwischen 0,8 und 1 liegt und das Verhältnis (hpc2/dm) zwischen 0,2 und 1,5 liegt.

8. Mehrfachdichtungsverbindung, **dadurch gekennzeichnet, daß** sie eine Reihe von Dichtungsverbindungen (6) gemäß Anspruch 1 umfaßt, die untereinander durch Verbindungsbereiche (30) verbunden sind.

9. Mehrfachdichtungsverbindung nach Anspruch 8, **dadurch gekennzeichnet**, das die Verbindungsbereiche (30) jeder eine Höhe (hmp) derart aufweisen, daß das Verhältnis (hmp/hce) zwischen 1 und 0,2 liegt.

10. Filtermodul des Typs, der wenigstens ein röhrenförmiges Filterelement (3) umfaßt, getragen an jedem seiner Endteile durch eine Trägerplatte (4), die mit einem Durchgang (5) versehen ist und auf welcher die Gegenplatte (11) befestigt ist, ausgerüstet mit einer Senkung (23) für jedes Filterelement (3),
**dadurch gekennzeichnet, daß** es für jeden Durchgang (5) der Trägerplatten (4) von eine Dichtungsverbindung (6) gemäß einem der Ansprüche 1 bis 7 umfaßt.

11. Filtermodul des Typs, der wenigstens zwei röhrenförmige Filterelemente (3) umfaßt, getragen an jedem von deren Endteilen durch eine Trägerplatte (4), ausgerüstet mit einem Durchgang (5) und auf welcher eine Gegenplatte (11) befestigt ist, die mit einer Senkung (23) für jedes Filterelement versehen ist,
**dadurch gekennzeichnet, daß** es eine Dichtungsverbindung (6) gemäß einem der Ansprüche 1 bis 7 für jeden Durchgang (5) der Trägerplatten (4) umfaßt oder eine Mehrfachdichtungsverbindung nach Anspruch 8, die jede Trägerplatte (4) ausrüstet.
